Europäisches Patentamt

European Patent Office

Office européen des brevets

(11) Numéro de publication: **0 253 722 B1**

# FASCICULE DE BREVET EUROPEEN

(45) Date de publication de fascicule du brevet: **23.12.92**  (51) Int. Cl.⁵: **G07F 7/10**

(21) Numéro de dépôt: **87401621.5**

(22) Date de dépôt: **09.07.87**

(54) **Procédé pour diversifier une clé de base et pour authentifier une clé ainsi diversifiée comme ayant été élaborée à partir d'une clé de base prédéterminée, et système pour la mise en oeuvre.**

(30) Priorité: **17.07.86 FR 8610416**

(43) Date de publication de la demande:
**20.01.88 Bulletin 88/03**

(45) Mention de la délivrance du brevet:
**23.12.92 Bulletin 92/52**

(84) Etats contractants désignés:
**AT BE CH DE ES FR GB IT LI LU NL SE**

(56) Documents cités:
**EP-A- 0 055 986**
**EP-A- 0 064 779**
**EP-A- 0 117 907**
**EP-A- 0 138 386**
**EP-A- 0 168 667**

**IBM TECHNICAL DISCLOSURE BULLETIN, vol. 24, no. 12, mai 1982, pages 6504-6509, New York, US; R.E. LENNON et al.: "Personal verification and message authentication using personal keys"**

(73) Titulaire: **BULL CP8**
**Rue Eugène Hénaff BP 45**
**F-78190 Trappes(FR)**

(72) Inventeur: **Hazard, Michel**
**27, rue des Harias**
**F-78124 Mareil/Mauldre(FR)**

(74) Mandataire: **Siloret, Patrick et al**
**Bull S.A. Industrial Property Department**
**P.C.: HO 8M006 B.P. 193.16 121,Avenue de Malakoff**
**F-75116 Paris(FR)**

Rank Xerox (UK) Business Services

# EP 0 253 722 B1

## Description

L'invention a pour objet un procédé pour diversifier une clé de base et pour authentifier une clé ainsi diversifiée comme ayant été élaborée à partir d'une clé de base prédéterminée, et un système pour la mise en oeuvre du procédé.

Un tel procédé permet notamment de diversifier les clés secrètes enregistrées dans des supports portatifs tels que des cartes à mémoire.

L'essor des applications qui mettent en oeuvre des objets portatifs tels que des cartes est essentiellement dû à l'avénement des cartes à mémoire dont une caractéristique essentielle est de posséder des circuits de traitement. Ces circuits comprennent généralement un microprocesseur qui effectue des calculs non seulement sur des données entrées de l'extérieur, mais surtout sur des données internes inaccessibles de l'extérieur.

De telles cartes sont distribuées à des utilisateurs par des organismes habilités qui proposent la délivrance de services par l'intermédiaire d'appareils ou terminaux mis à la disposition du public et auxquels l'utilisateur accouple temporairement sa carte.

Tout appareil ne délivre généralement le service demandé qu'après s'être préalablement assuré que la carte a bien été établie à l'origine comme pouvant donner accès à ce service.

En effet, il faut éviter à tout prix qu'une carte établie pour accéder à un service (A) ne puisse être également utilisée pour accéder à un service (B), ou qu'un fraudeur ne puisse concevoir ou simuler une fausse carte donnant accès au service (A) et/ou (B).

Ces buts sont généralement atteints par l'établissement préalable d'un échange d'informations sous forme d'un dialogue entre la carte et l'appareil.

Un type de dialogue tel que décrit dans le brevet américain N° 4 471 216 de la demanderesse correspondant à son brevet français N° 2 469 760 prend en compte une clé secrète seule connue de l'organisme habilité et enregistrée à la fois dans la carte et dans l'appareil. A titre d'exemple, la carte calcule un résultat qui est fonction de sa clé secrète et l'appareil calcule un résultat similaire qui est fonction de sa clé secrète. Les résultats sont comparés par l'appareil qui n'autorisera l'accès au service demandé qu'en cas d'identité ou de concordance entre ces résultats. Cette condition ne peut être satisfaite que si les clés de la carte et de l'appareil sont identiques.

Ainsi, tout appareil conçu pour délivrer un service donné est apte à reconnaître l'ensemble des cartes qui auront été délivrées par un organisme habilité pour obtenir l'accès à ce service.

Cependant, pour une même clé secrète enregistrée dans un appareil, il y a n cartes d'une même famille possédant cette clé secrète (n pouvant atteindre plusieurs millions, notamment dans les applications bancaires). Si un fraudeur parvient à percer le secret de cette clé, il se trouve dans la possibilité de pouvoir fabriquer et diffuser de fausses cartes qui seront cepandant reconnues comme valables par les appareils. Une telle conséquence serait donc catastrophique et nécessiterait le changement de la clé secrète et la distribution de nouvelles cartes.

Pour pallier cet inconvénient, l'invention prévoit de diversifier les clés secrètes des cartes à partir d'une même clé de base tout en permettant aux appareils de les reconnaitre comme ayant été élaborées à partir d'une même clé de base. Ainsi, chaque carte aura une clé secrète propre et différente des clés attribuées aux autres cartes.

L'invention propose donc un procédé pour diversifier une clé de base par un système d'initialisation, chaque clé diversifiée étant enregistrée dans une mémoire d'un dispositif objet, et pour faire reconnaitre par un système d'exploitation que la clé diversifiée d'un dispositif objet a bien été élaborée à partir d'une clé de base prédéterminée, caractérisé en ce qu'il consiste :

- pour diversifier une clé de base Sb préenregistrée dans une mémoire du système d'initialisation :
  à faire calculer par des circuits de traitement de ce système une clé diversifiée Sd, en soumettant à une transformation combinatoire biunivoque commutative (T) la clé de base Sb et un paramètre de diversification Du propre à chaque dispositif objet , de sorte que Sd = Du (T) Sb,
- à enregistrer la clé diversifiée Sd ainsi calculée dans la mémoire du dispositif objet,
- et pour faire reconnaître la clé diversifiée Sd d'un dispositif objet comme ayant été élaborée à partir d'une clé de base Sb:
  à accoupler le dispositif objet avec un système d'exploitation ayant une mémoire où est enregistrée la clé de base Sb, et à faire calculer par des circuits de traitement de ce système un paramètre intermédiaire Pu, en soumettant à la transformation (T) une donnée Cu propre à chaque dispositif objet et le paramètre Du de diversification précité,de sorte que Pu = Cu (T) Du,

et à faire calculer d'une part par le système d'exploitation un premier certificat R1 qui est fonction d'une donnée externe Ex et d'une première clé K1, de sorte que R1 = f3 (K1, Ex),

2

avec K1 = Sb (T) Pu

et d'autre part par le dispositif objet un second certificat R2 fonction de la donnée externe Ex et d'une seconde clé K2, de sorte que R2 = f4 (K2, Ex)

avec K2 = Sd (T) Cu

les deux certificats (R1, R2) étant identiques si la clé diversifiée Sd du dispositif objet a bien été calculée à partir de la même clé de base Sb que celle enregistrée dans le système d'exploitation.

Selon une caractéristique du procédé, la transformation (T) est une fonction OU exclusif.

Selon une autre caractéristique de l'invention, un système d'initialisation pour la mise en oeuvre du procédé selon la revendication principale est caractérisé en ce qu'il comprend pour initialiser un dispositif objet avec une clé diversifiée Sd :

- des moyens d'accouplement avec le dispositif objet,
- une mémoire où est enregistrée une clé de base Sb et un programme, - des circuits de traitement pour calculer la clé diversifiée Sd par exécution du programme qui applique une transformation (T) combinatoire biunivoque commutative à la clé de base et à un paramètre de diversification Du propre à chaque dispositif objet, de sorte que Sd = Sb (T) Du.

Selon une autre caractéristique, un système d'exploitation pour la mise en oeuvre du procédé selon la revendication principale est caractérisé en ce qu'il comprend pour reconnaître la clé diversifiée Sd enregistrée dans un dispositif objet :

- des moyens d'accouplement avec le dispositif objet,
- une mémoire où est enregistrée un programme, et des circuits de traitement pour calculer un paramètre intermédiaire Pu par exécution du programme qui applique une transformation (T) combinatoire biunivoque commutative à un paramètre Du de diversification propre à chaque dispositif objet et à une donnée Cu propre à chaque dispositif objet, de sorte que Pu = Du (T) Cu,
- une mémoire où sont enregistrés une clé de base Sb et un programme, et des circuits de traitement pour calculer un certificat R1 par exécution du programme, dans lequel :

$$R1 = f3 \ (K1, \ Ex)$$

$$avec \qquad K1 = Sb \ (T) \ Pu$$

où Ex est une information externe.

D'autres avantages, caractéristiques et détails apparaîtront à la lumière de la description explicative qui va suivre faite en référence aux dessins annexés donnés à titre d'exemple.

- la figure 1 montre schématiquement un système d'initialisation pour illustrer la première phase du procédé conforme à l'invention,
- et la figure 2 montre schématiquement un système d'exploitation pour illustrer la deuxième phase du procédé conforme à l'invention,

D'une façon générale, le procédé conforme à l'invention se décompose en une phase d'initialisation et en une phase d'exploitation.

La phase d'initialisation consiste :

- à faire calculer par un système d'initialisation une clé diversifiée à partir d'une clé de base prédéterminée,
- et à enregistrer cette clé secrète ainsi diversifiée dans une mémoire d'un objet portatif.

Cette première phase est réalisée par un organisme habilité qui remet ensuite l'objet portatif à un utilisateur, chaque objet portatif ayant une clé secrète différente. Chaque utilisateur pourra ensuite demander l'accès à des services au moyen de son objet portatif, mais ces accès ne pourront être validés qu'après un contrôle basé sur la reconnaissance de la clé diversifiée enregistrée dans l'objet portatif. Ce contrôle fait l'objet de la deuxième phase ou phase d'exploitation qui sera décrite plus loin.

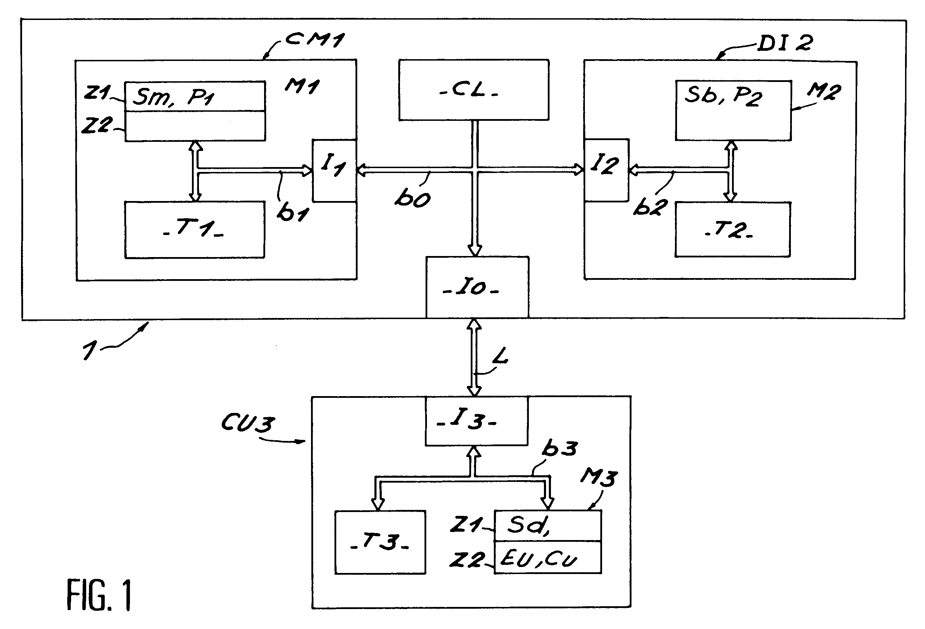

Le système d'initialisation (1) représenté à la figure 1 se compose notamment d'un dispositif source (CM1), d'un dispositif intermédiaire (DI2), d'un dispositif d'entrée tel qu'un clavier (CL) et d'une interface d'entrée-sortie (I0).

Le dispositif source (CM1) se compose notamment d'une mémoire (M1), de circuits de traitement (T1) tels qu'un microprocesseur et d'une interface d'entrée/sortie (I1). L'ensemble de ces circuits sont reliés entre eux par un bus de liaison (b1).

Dans la mémoire (M1) du dispositif source (CM1) sont au moins enregistrées les informations suivantes :

3

- une clé secrète intermédiaire (Sm),
- et un programme de calcul (P1) dont la fonction sera explicitée plus loin.

Le dispositif intermédiaire (DI2) se compose notamment d'une mémoire (M2), de circuits de traitement (T2) tels qu'u microprocesseur et d'une interface d'entrée-sortie (I2). L'ensemble de ces circuits sont reliés entre eux par une bus de liaison (b2).

La mémoire (M2) du dispositif intermédiare (DI2) contient les informations suivantes :
- une clé de base prédéterminée (Sb), - et un programme (P2) dont la fonction sera explicitée plus loin.

Les interfaces (I1,I2) du dispositif source (CM1) et du dispositif intermédiaire (DI2) sont reliées ensemble ainsi que le clavier (CL) et l'interface d'initialisation (1) par un bus de liaison (b0).

Un objet portatif (CU3) à initialiser se compose notamment d'une mémoire (M3), de circuits de traitement (T3) tels qu'un microprocesseur et d'une interface d'entrée-sortie (I3). L'ensemble de ces circuits sont reliés par un bus de liaisons (b3).

Selon un mode préférentiel de réalisation, l'objet portatif (CU3) ou carte usager est constitué par une carte à mémoire telle celle décrite dans les brevets américains N° 4 211 919 et 4 382 279 correspondant respectivement aux brevets français n° 2 401 459 et 461 301 de la demanderesse.

La carte usager (CU3) est accouplée au système d'initialisation par une ligne de transmission (L) qui relie les interfaces (I0,I3). Une telle ligne (L) est notamment décrite dans le brevet américain N° 4 556 958 correspondant au brevet français n° 2 483 713 de la demanderesse.

Le système d'initialisation (1) a donc pour fonction de calculer une clé diversifiée (Sd) à partir d'une clé de base prédéterminée (Sb).

Le principe de ce calcul est le suivant. Dans un premier temps, on calcule un paramètre de diversification (Du) à partir de données spécifiques à chaque carte usager à initialiser et d'une clé de base intermédiaire (Sm). Dans un deuxième temps, on calcule la clé diversifée (Sd) à partir du paramètre de diversification (Du) et de la clé de base prédéterminée (Sb).

Dans un premier mode de réalisation, le calcul du paramètre de diversification (Du) est effectué par le dispositif source (CM1) et le calcul de la clé diversifiée (Sd) est effectué par le dispositif intermédiaire (DI2).

Plus précisément, les circuits de traitement (T1) du dispositif source (CM1) exécutent le programme (P1) précité pour calculer un paramètre de diversification (Du) tel que :

Du = f1 (Sm, Eu, Cu)

où (Sm) est la clé de base intermédiaire précitée enregistrée dans la mémoire (M1), (Eu) est une donnée spécifique de la carte usager (CU3) entrée au clavier (CL) et enregistrée dans la mémoire (M3), et (Cu) une donnée de diversification spécifique de la carte usager (CU3) soit externe et entrée au clavier(CL) avant d'être enregistrée dans la mémoire (M3), soit interne et déjà préenregistrée dans la mémoire (M3).

Ensuite, le dispositif intermédiaire (DI2) calcule une clé diversifiée (Sd) à partir de la clé de base prédéterminée (Sb) enregistrée dans sa mémoire (M2) et du paramètre de diversification (Du) calculé par le dispositif source (CM1) et transmis par le bus (b0) au dispositif intermédiaire (DI2).

La clé diversifiée (Sd) est calculée par les circuits de traitement (T2) qui exécutent le programme (P2) qui est la mise en oeuvre d'une transformation combinatoire biunivoque (T) telle que :

Sd = Sb (T) Du

A titre d'exemple, cette transformation est une fonction OU EXCLUSIF.

Enfin, la clé diversifiée (Sd) ainsi calculée est enregistrée dans la mémoire (M3) de la carte (CU3).

Il est à noter que la mémoire (M3) de la carte usager (CU3) est avantageusement divisée en au moins deux zones (Z1, Z2). La zone de mémoire (Z1) est telle que les informations une fois enregistrées sont inaccessibles depuis l'extérieur, mais uniquement accessibles par les circuits de traitement (T3). La zone de mémoire (Z2) est telle que les informations enregistrées peuvent être lues mais non modifiées depuis l'extérieur. De tels accès mémoire sont notamment décrit dansle brevet américain N° 4 211 919 de la demanderesse correspondant à son brevet français n° 2 401 459.

Comme la zone de mémoire (Z1) permet de préserver le secret des informations enregistrées, la clé diversifiée (Sd) est enregistrée dans cette zone, alors que les données (Eu, Cu) propres à l'usager sont enregistrées dans la zone (Z2).

La phase d'initialisation ainsi décrite est généralement complétée par l'écriture dans la mémoire (M3) de la carte (CU3) de plusieurs autres informations spécifiques de chaque application.

Une carte usager ainsi initialisée par un organisme habilité est remise à un utilisateur qui peut ensuite obtenir la délivrance d'un service auquel donne droit sa carte en l'accouplant à un appareil ou terminal chargé de cette délivrance et géré par l'organisme habilité.

Avant d'assurer cette délivrance, l'appareil doit s'assurer que la carte présentée possède une clé secrète authentique, c'est-à-dire que cette clé a bien été calculée à partir de la clé de base qui est propre au service demandé et préenregistrée dans tout l'appareil chargé de dispenser ce service. Dans le cas contraire, l'appareil aura détecté soit une fausse carte, soit une bonne carte mais qui n'aura pas été initialisée pour obtenir la délivrance du service dispensé par cet appareil.

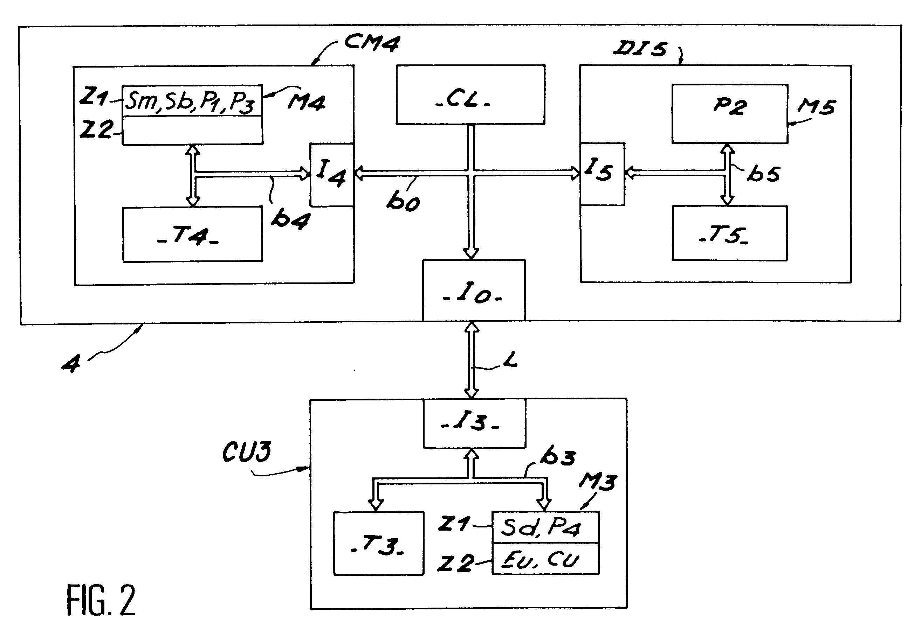

Ce contrôle fait l'objet de la deuxième phase du procédé ou phase d'exploitation telle que décrite en référence à la figure 2.

Le système d'exploitation (4) est composé d'un dispositif de contrôle (CM4), d'un dispositif intermémdiaire (DI5), d'un dispositif d'entrée (CL) tel qu'un clavier par exemple et d'une interface d'entrée-sortie (I0).

Le dispositif de contrôle (CM4) se compose notamment d'une mémoire (M4), de circuits de traitement (T4) tels qu'un microprocesseur, et d'une interface d'entrée-sortie (I4). L'ensemble de ces circuits sont reliés entre eux par un bus de liaison (b4).

Dans la mémoire (M4) sont au moins enregistrées les informations suivantes :
- les clés secrètes (Sm, Sb) utilisées lors de la phase d'initialisation,
- le programme (P1) également utilisé dans la phase d'initialisation pour calculer le paramètre de diversification (Du),
- et un programme (P3) dont la fonction sera explicitée plus loin.

Le dispositif intermédiaire (DI5) se compose notamment d'une mémoire (M5), de circuits de traitement (T5) tels qu'un microproceseur, et d'une interface d'entrée-sortie (I5). L'ensemble de ces circuits sont reliés entre eux par un bus de liaison (b5).

La mémoire (M5) du dispositif intermédiaire (DI5) contient au moins le même programme (P2) dont la fonction sera explicitée plus loin.

Les interfaces (I4, I5) du dispositif de contrôle (CM4) et du dispositif intermédiaire (DI5) sont reliées ensemble ainsi qu'au clavier (CL) et à l'interface (I0) du système d'exploitation (4) par un bus de liaison (b0).

Soit une carte usager (CU3) telle que précédemment initialisée et accouplée temporairement au système d'exploitation (4). Cet accouplement est obtenu par une ligne de transmission (L) du type précité qui relie l'interface (I0) du système (4) et l'interface (I3) de la carte (CU3).

Dans un premier temps, le dispositif de contrôle (CM4) recalcule un paramètre de diversification (Du) par exécution du programme (P1) par les circuits de taitement (T4). Ce paramètre (Du) est tel que :

$$Du = f1 \ (Sm, \ Eu, \ Cu)$$

où les paramètres (Eu, Cu) ont été prélevés de la mémoire (M3) de la carte usager (CU3).

Une fois calculé, le paramètre de diversification est transmis au dispositif intermédiaire (DI5) dont les circuits de traitement (T5) vont exécuter le programme (P2) pour obtenir un paramètre (Pu) tel que :

$$Pu = Du \ (T) \ Cu$$

où (Cu) est le paramètre prélevé de la mémoire (M3) de la carte usager (CU3).

A ce stade du procédé, il est important de noter une originalité de l'invention. Le dispositif de contrôle (CM4) et le dispositif intermédiaire (DI5) ne recalculent par directement une clé diversifiée (Sd) à partir de la clé de base (Sb) pour la comparer ensuite à celle enregistrée dans la carte usager (CU3). Ainsi, la clé diversifiée (Sd) est d'autant mieux protégée.

Pour permettre cependant une reconnaissance de la clé diversifiée (Sd) enregistrée dans la carte usager (CU3), le dispositif de contrôle (CM4) et la carte (CU3) vont respectivement calculer le résultat dénommé certificat. Ces certificats seront identiques si la clé diversifiée (Sd) de la carte (CU3) a été calculée à partir de la même clé de base (Sb) que celle enregistrée dans la mémoire (M4) du dispositif de contrôle (CM4). L'identité des deux certificats est basée sur les relations qui existent entre les clés secrètes (Sb, Sd) et les paramètres (Pu, Du) comme explicité ci-après.

Un premier certificat ou résultat (R1) est calculé par les circuits de traitement (T4) du dispositif de contrôle (CM4) par exécution du programme (P3) enregistré dans la mémoire (M4). Ce résultat (R1) est tel que :

$$R1 = f3 \ (K1, \ Ex)$$
$$avec \quad K1 = Sb \ (T) \ Pu$$

où (Sb) est la clé de base enregistrée dans a mémoire (M4), (Pu) le paramètre calculé par le dispositif intermédiaire (DI5), et (Ex) une donnée externe entrée par exemple au clavier (CL) par un opérateur ou par l'usager.

De leur côté, les circuits de traitement (T3) de la carte usager (CU3) exécutent le programme (P4) préenregistré dans la mémoire (M3) lors de la phase d'initialisation pour obtenir un second certificat ou résultat (R2) tel que :

$$R2 = f4 \ (K2, \ Ex)$$
$$avec \quad K2 = Sd \ (T) \ Cu$$

où (Sd) est la clé diversifée enregistrée dans la mémoire (M3), (Cu) le paramètre prélevé dans la zone de mémoire (Z2), et (Ex) la donnée externe précitée.

Si la clé diversifiée (Sd) a bien été calculée à partir d'une clé de base (Sb) identique à celle enregistrée dans le dispositif de contrôle (CM4), les deux résultats (R1, R2) seront identiques pour les raisons suivantes :

- le paramètre intermédiaire (K2) pour le calcul du résultat (R2) est tel que :

$$K2 = Sd \ (T) \ Cu$$
$$or \quad : Sd = Sb \ (T) \ Du$$
$$d'où : K2 = Sb \ (T) \ Du \ (T) \ Cu$$
$$or \quad : Pu = Cu \ (T) \ Du$$
$$d'où : K2 = Sb \ (T) \ Pu = K1 \ (paramètre$$
$$intermédiaire \ utilisé \ pour \ le \ calcul \ du \ résultat \ (R1).$$

Toutes ces égalités sont satisfaites car la transformation (T) utilisée est une transformation commutative.

Bien entendu, si au moins l'une de ces égalités n'est pas satisfaite, la clé diversifiée (Sd) du dispositif objet (CU3) n'est pas reconnue comme authentique et le dialogue est interrompu.

Il ressort de ce qui prècède que le dispositif source (CM1) et le dispositif intermédiaire (DI2) du système d'initialisation (1), ainsi que le dispositif de contrôle (CM4) et le dispositif intermédiaire (DI5) du système d'exploitation (4), renferment des informations qui doivent rester secrètes pour interdire la fraude qui peut consister à simuler de fausses cartes usagers (CU3) qui soient reconnues comme authentiques par le dispositif de contrôle (CM4).

Il est donc indispensable de prendre des mesures de sécurité pour protéger l'accès aux informations contenues dans les mémoires (M1, M2, M4 et M5).

Une première solution consiste à prendre des mesures de protection physiques ou matérielles rendant difficilement accessibles ces mémoires.

Une deuxième solution consiste, une fois les informations écrites, à verrouiller les accès mémoire de manière à les rendre inaccessibles de l'extérieur, mais uniquement accessibles par les circuits de traitement respectivement associés à ces mémoires.

Cette deuxième solution est satisfaite si les mémoires correspondent aux mémoires d'objets portatifs tels que les cartes usagers (CU3). Plus présisément, la mémoire (M1) et les circuits de traitement (T1) du dispositif source (CM1) du système d'inaitailsation (1) d'une part, et la mémoire (M4) et les circuits de traitement (T4) du dispositif de contrôle (CM4) du système d'exploitation (4) d'autre part, sont intégrés dans une carte du type usager où chaque mémoire (M1, M4) est divisée en au moins zones de mémoire (Z1, Z2).

Une troisième solution consiste à regrouper le dispositif source (CM1) et le dispositif intermédiaire (DI2) du système d'initailisation (1) dans un même dispositif conçu par exemple sous la forme d'un boîtier à circuits intégrés avec les mêmes caractéristiques d'accès à la mémoire qu'une carte précitée. Cette solution s'applique également au dispositif de contrôle (CM4) et au dispositif intermédiaire (DI5) du système d'exploitation (4).

En variante de cette troisième solution, le boîtier à circuits intégrés précité est inclus dans un objet portatif et notamment dans une carte à mémoire précitée.

**Revendications**

1. Procédé pour diversifier une clé de base par un système d'initialisation, chaque clé diversifiée étant enregistrée dans une mémoire d'un dispositif objet, et pour faire reconnaître par un système d'exploitation que la clé diversifiée d'un dispositif objet a bien été élaborée à partir d'une clé de base prédéterminée, caractérisé en ce qu'il consiste :

- pour diversifier une clé de base Sb préenregistrée dans une mémoire (M2) du système d'initialisation (1):

à faire calculer par des circuits de traitement (T1, T2) de ce système (1) une clé diversifiée Sd, en soumettant à une transformation combinatoire biunivoque commutative (T) la clé de base Sb et un paramètre de diversification Du propre à chaque dispositif objet (CU3), de sorte que Sd = Du (T) Sb,

- à enregistrer la clé diversifiée Sd ainsi calculée dans la mémoire (M3) du dispositif objet (CU3),

- et pour faire reconnaître la clé diversifiée Sd d'un dispositif objet (CU3) comme ayant été élaborée à partir d'une clé de base Sb:

à accoupler le dispositif objet (CU3) avec un système d'exploitation (4) ayant une mémoire (M4) où est enregistrée la clé de base Sb, et à faire calculer par des circuits de traitement (T4, T5) de ce système (4) un paramètre intermédiaire Pu, en soumettant à la transformation (T) une donnée Cu propre à chaque dispositif objet (CU3) et le paramètre Du de diversification précité, de sorte que Pu = Cu (T) Du,

et à faire calculer d'une part par le système d'exploitation (4) un premier certificat R1 qui est fonction d'une donnée externe Ex et d'une première clé K1, de sorte que R1 = f3 (K1, Ex),

avec K1 = Sb (T) Pu

et d'autre part par le dispositif objet (CU3) un second certificat R2 fonction de la donnée externe Ex et d'une seconde clé K2, de sorte que R2 = f4 (K2, Ex)

avec K2 = Sd (T) Cu

les deux certificats (R1, R2) étant identiques si la clé diversiflée Sd du dispositif objet (CU3) a bien été calculée à partir de la même clé de base Sb que celle enregistrée dans le système d'exploitation (4).

2. Procédé selon la revendication 1, caractérisé en ce qu'il consiste à faire calculer par le système d'initialisation (1) le paramètre de diversification Du précité par exécution d'un programme (P1) enregistré dans sa mémoire (M1) et qui prend en compte une donnée (Eu) propre au dispositif objet (CU3).

3. Procédé selon la revendication 2, caractérisé en ce que le programme (P1) précité prend également en compte une clé intermédiaire (Sm) préenregistrée dans la mémoire (M1) du système d'initialisation (1).

4. Procédé selon la revendication 1, caractérisé en ce qu'il consiste à faire calculer par le système d'exploitation (4) le paramètre de diversification Du précité par exécution d'un programme (P1) enregistré dans sa mémoire (M4) et qui prend en compte une donnée (Eu) propre au dispositif objet (CU3).

5. Procédé selon la revendication 4, caractérisé en ce que le programme (P1) précité prend également en compte une clé intermédiaire (Sm) préenregistrée dans la mémoire (M4) du système d'exploitation (4).

6. Procédé selon la revendication (1), caractérisé en ce qu'il consiste à prendre pour la transformation (T) précitée une fonction OU EXCLUSIF.

7. Système d'initialisation pour la mise en oeuvre du procédé tel que défini selon l'une des revendications 1 à 6, caractérisé en ce qu'il comprend pour initialiser un dispositif objet (CU3) avec une clé diversifiée Sd :

- des moyens d'accouplement (I0, I3, L) avec le dispositif objet (CU3), - une mémoire (M2) où est enregistrée une clé de base Sb et un programme (P2), des circuits de traitement (T2) pour calculer la clé diversifiée Sd par exécution du programme (P2) qui applique une transformation (T) combinatoire biunivoque commutative à la clé de base et à un paramètre de diversification Du propre à chaque dispositif objet (CU3), de sorte que Sd = Sb (T) Du.

8. Système selon la revendication 7, caractérisé en ce qu'il comprend également des circuits de traitement (T1) pour calculer le paramètre de diversification Du précité par exécution d'un programme (P1) enregistré dans une mémoire (M1) et qui prend en compte au moins une donnée (Eu) propre au dispositif objet (CU3).

9. Système selon la revendication 8, caractérisé en ce que le programme (P1) précité prend également en compte une clé intermédiaire (Sm) préenregistrée dans la mémoire (M1).

10. Système selon l'une des revendications 7 à 9, caractérisé en ce que les circuits de traitement (T1) et la mémoire (M1) précitée sont intégrés dans un objet portatif tel qu'une carte à mémoire (CM1).

11. Système selon l'une des revendications 7 à 9, caractérisé en ce que les circuits de traitement (T1, T2) et les mémoires (M1, M2) sont intégrés dans un boîtier à circuits intégrés.

12. Système selon la revendication 11, caractérisé en ce que le boîtier précité est logé dans un objet portatif tel qu'une carte à mémoire.

13. Système d'exploitation pour la mise en oeuvre du procédé tel que défini Selon l'une des revendications 1 à 6, caractérisé en ce qu'il comprend pour reconnaître la clé diversifiée Sd enregistrée dans un dispositif objet (CU3) :
   - des moyens d'accouplement (I0, I3, L) avec le dispositif objet (CU3),
   - une mémoire (M5) où est enregistrée un programme (P2), et des circuits de traitement (T5) pour calculer un paramètre intermédiaire Pu par exécution du programme (P2) qui applique une transformation (T) combinatoire biunivoque commutative à un paramètre Du de diversification propre à chaque dispositif objet (CU3) et à une donnée Cu propre à chaque dispositif objet (CU3), de sorte que Pu = Du (T) Cu,
   - une mémoire (M4) où sont enregistrés une clé de base Sb et un programme (P3), et des circuits de traitement (T4) pour calculer un certificat R1 par exécution du programme (P3), dans lequel :

$$R1 = f3 \ (K1, \ Ex)$$

$$avec \qquad K1 = Sb \ (T) \ Pu$$

où Ex est une information externe.

14. Système selon la revendication (13), caractérisé en ce que la mémoire (M4) précitée contient également un programme (P1) exécuté par les circuits de traitement (T4) pour calculer le paramètre de diversification Du précité et qui prend en compte au moins une donnée (Eu) propre au dispositif objet (CU3).

15. Système selon la revendication 14, caractérisé en ce que le programme (P1) précité prend également en compte une clé intermédiaire (Sm) préenregistrée dans la mémoire (M4).

16. Système selon l'une des revendications 13 à 15, caractérisé en ce que la mémoire (M4) et les circuits de traitement (T4) sont intégrés dans un objet portatif (CM4) tel qu'une carte à mémoire.

17. Système selon l'une des revendications 13 à 15, caractérisé en ce que les mémoires (M4, M5) et les circuits de traitement (T4, T5) sont intégrés dans un boîtier à circuits intégrés.

18. Système selon la revendication 17, caractérisé en ce que le boîtier précité est logé dans un objet portatif tel qu'une carte à mémoire.

19. Système selon l'une des revendications 13 à 15, caractérisé en ce que la mémoire (M3) du dispositif objet (CU3) accouplée audit système contient un programme (P4) exécuté par les circuits de traitement (T3) pour calculer un certificat R2 dans lequel:

$$R2 = f4 \ (Ex, \ K2)$$

$$avec \qquad K2 = Sd \ (T) \ Cu$$

où Ex est l'information externe précitée, ce certificat R2 devant être identique au certificat R1 précité calculé par ledit système.

20. Système selon l'une des revendications 13 à 19, caractérisé en ce que le dispositif objet (CU3) est un objet portatif tel qu'une carte à mémoire.

**Claims**

1. Procedure for diversifying a basic code by means of an initialisation system, each diversified code being recorded in a memory of a subject device, and for identifying, by means of an operating system, that the diversified code of a subject device has indeed been generated from a predetermined basic code, characterised in that it consists:
   - in order to diversify a basic code Sb prerecorded in a memory (M2) of the initialisation system (1):
     of calculating, by means of the processing circuits (T1, T2) of said system (1), a diversified code Sd by subjecting the basic code Sb and a diversification parameter Du specific to each subject device (CU3) to a commutative one-to-one combinational transformation (T), such that Sd = Du (T) Sb,
   - of recording the diversified code Sd thus calculated in the memory (M3) of the subject device (CU3),
   - and to have the diversified code Sd of a subject device (CU3) identified as having been generated from a basic code Sb:
     of connecting the subject device (CU3) to an operating system (4) having a memory (M4) in which the basic code Sb is recorded, and of calculating by means of the processing circuits (T4, T5) of said system (4) an intermediate parameter Pu, by subjecting a data element Cu specific to each subject device (CU3) and the aforementioned diversification parameter Du to the transformation (T), such that Pu = Cu (T) Du,
   and of calculating, on the one hand by means of the operating system (4), a first code authentication R1 which is a function of an external data element Ex and a first code K1, such that R1 = f3 (K1, Ex), and K1 = Sb (T) Pu
   and, on the other hand by means of the subject device (CU3), a second code authentication R2, which is a function of the external data element Ex and a second code K2, such that R2 = f4 (K2, Ex) and K2 = Sd (T) Cu
   the two code authentications (R1, R2) being identical if the diversified code Sd of the subject device (CU3) has indeed been calculated from the same basic code Sb as that recorded in the operating system (4).

2. Procedure according to claim 1, characterised in that it consists of calculating by means of the initialisation system (1), the aforementioned diversification parameter Du by executing a program (P1) recorded in its memory (M1) and which includes a data element (Eu) specific to the subject device (CU3).

3. Procedure according to claim 2, characterised in that the aforementioned program (P1) also includes an intermediate code (Sm) prerecorded in the memory (M1) of the initialisation system (1).

4. Procedure according to claim 1, characterised in that it consists of calculating, by means of the operating system (4), the aforementioned diversification parameter Du by executing a program (P1) recorded in its memory (M4) and which includes a data element (Eu) specific to the subject device (CU3).

5. Procedure according to claim 4, characterised in that the aforementioned program (P1) also includes an intermediate code (Sm) prerecorded in the memory (M4) of the operating system (4).

6. Procedure according to claim 1, characterised in that it consists of using an EXCLUSIVE-OR function for the aforementioned transformation (T).

7. Initialisation system for using the procedure as defined according to one of claims 1 to 6, characterised in that, in order to initialise a subject device (CU3) with a diversified code Sd, it comprises:

- means of connection (I0, I3, L) with the subject device (CU3), - a memory (M2) in which a basic code Sb and a program (P2) are recorded, processing circuits (T2) for calculating the diversified code Sd by executing the program (P2) which applies a commutative one-to-one combinational transformation (T) to the basic code and to a diversification parameter Du specific to each subject device (CU3), such that Sd = Sb (T) Du.

8. System according to claim 7, characterised in that it also comprises processing circuits (T1) for calculating the aforementioned diversification parameter Du by executing a program (P1) recorded in a memory (M1) and which includes at least one data element (Eu) specific to the subject device (CU3).

9. System according to claim 8, characterised in that the aforementioned program (P1) also includes an intermediate code (Sm) prerecorded in the memory (M1).

10. System according to one of claims 7 to 9, characterised in that the processing circuits (T1) and the aforementioned memory (MI) are integrated into a portable object such as a smart card (CM1).

11. System according to one of claims 7 to 9, characterised in that the processing circuits (T1, T2) and the memories (M1, M2) are integrated into an integrated circuit package.

12. System according to claim 11, characterised in that the aforementioned package is mounted in a portable object, such as a smart card.

13. Operating system for using the procedure as defined according to one of claims 1 to 6, characterised in that, in order to identify the diversified code Sd recorded in a subject device (CU3), it comprises:
    - means of connection (I0, I3, L) with the subject device (CU3),
    - a memory (M5) in which a program (P2) is recorded, and processing circuits (T5) for calculating an intermediate parameter Pu by executing the program (P2) which applies a commutative one-to-one combinational transformation (T) to a diversification parameter Du specific to each subject device (CU3) and to a data element Cu specific to each subject device (CU3), such that Pu = Du (T) Cu,
    - a memory (M4) in which a basic code Sb and a program (P3) are recorded, and processing circuits (T4) for calculating a code authentication R1 by executing the program (P3), in which:

$$R1 = f3 \ (K1, \ Ex)$$
$$\text{and} \quad K1 = Sb \ (T) \ Pu$$

where Ex is an external data element.

14. System according to claim 13, characterised in that the aforementioned memory (M4) also contains a program (P1) executed by the processing circuits (T4) in order to calculate the aforementioned diversification parameter Du and which includes at least one data element (Eu) specific to the subject device (CU3).

15. System according to claim 14, characterised in that the aforementioned program (P1) also includes an intermediate code (Sm) prerecorded in the memory (M4).

16. System according to one of claims 13 to 15, characterised in that the memory (M4) and the processing circuits (T4) are integrated into a portable object (CM4), such as a smart card.

17. System according to one of claims 13 to 15, characterised in that the memories (M4, M5) and the processing circuits (T4, T5) are integrated into an integrated circuit package.

18. System according to claim 17, characterised in that the aforementioned package is mounted in a portable object, such as a smart card.

19. System according to one of claims 13 to 15, characterised in that the memory (M3) of the subject device (CU3) connected to the said system contains a program (P4) executed by the processing circuits (T3) in order calculate a code authentication R2 in which:

$$R2 = f4 \ (Ex, \ K2)$$
$$\text{and:} \quad K2 = Sd \ (T) \ Cu$$

where Ex is the aforementioned external data element, said code authentication R2 having to be identical to the aforementioned code authentication R1 calculated by the said system.

20. System according to one of claims 13 to 19, characterised in that the subject device (CU3) is a portable object such as a smart card.

**Patentansprüche**

1. Verfahren zum Wechseln eines Grundschlüssels durch ein Initialisierungssystem, wobei jeder gewechselte Schlüssel in einem Speicher einer Objektvorrichtung gespeichert ist, sowie zur Ermöglichung des Erkennens durch ein Auswertungssystem, ob der gewechselte Schlüssel einer Objektvorrichtung anhand eines vorbestimmten Grundschlüssels richtig erstellt worden ist, dadurch gekennzeichnet,
    - daß zum Wechseln eines zuvor in einem Speicher (M2) des Initialisierungssystems (1) gespeicherten Grundschlüssels Sb:
      durch Verarbeitungsschaltungen (T1, T2) dieses Systems (1) ein gewechselter Schlüssel Sd berechnet wird, indem der Grundschlüssel Sb sowie ein zu jeder Objektvorrichtung (CU3) gehörigen Wechselparameter Du einer kombinatorischen, kommutativen, eineindeutigen Transformation (T) unterzogen werden, so daß gilt: Sd - Du (T) Sb,
    - der auf diese Weise berechnete gewechselte Schlüssel Sd in dem Speicher (M3) der Objektvorrichtung (CU3) gespeichert wird,
    - und daß zum Erkennen des gewechselten Schlüssels Sd einer Objektvorrichtung (CU3) als anhand eines Basisschlüssels Sb erstellt:
      die Objektvorrichtung (CU3) mit einem Auswertungssystems (4) verbunden wird, die mit einem Speicher (M4) versehen ist, in dem der Basisschlüssel Sb gespeichert ist, und durch Verarbeitungsschaltungen (T4, T5) dieses Systems (4) ein Zwischenparameter Pu berechnet wird, in dem auf die Transformation (T) ein jeder Objektvorrichtung (CU3) zugeordneter Datenwert Cu sowie der zuvor genannte Wechselparameter Du angewendet wird, so daß gilt: Pu = Cu (T) Du,
    und einerseits durch das Auswertungssystem (4) ein erstes Zertifikat R1 berechnet wird, das von einem externen Datenwert Ex und einem ersten Schlüssel K1 abhängt, so daß gilt: R1 = f3 (K1, Ex), mit K1 = Sb (T) Pu, und andererseits durch die Objektvorrichtung (CU3) ein zweites Zertifikat R2 berechnet wird, das von dem externen Datenwert Ex und einem zweiten Schlüssel K2 abhängt, derart, daß gilt: R2 = f4 (K2, Ex), mit K2 = Sd (T) Cu,
    wobei die zwei Zertifikate (R1, R2) identisch sind, wenn der gewechselte Schlüssel Sd der Objektvorrichtung (CU3) anhand des gleichen Grundschlüssels Sb wie der im Auswertungssystem (4) gespeicherte Grundschlüssel berechnet worden ist.

2. Verfahren nach Anspruch 1, dadurch gekennzeichnet, daß durch das Initialisierungssystem (1) der vorgenannte Wechselparameter Du durch Ausführung eines Programms (P1) berechnet wird, das in seinem Speicher (M1) gespeichert ist und das einen der Objektvorrichtung (CU3) zugeordneten Datenwert (Eu) berücksichtigt.

3. Verfahren nach Anspruch 2, dadurch gekennzeichnet, daß das vorgenannte Programm (P1) auch einen Zwischenschlüssel (Sm) berücksichtigt, der zuvor in dem Speicher (M1) des Initialisierungssystems (1) gespeichert worden ist.

4. Verfahren nach Anspruch 1, dadurch gekennzeichnet, daß durch das Auswertungssystem (4) der vorgenannte Wechselparameter Du durch Ausführung eines Programms (P1) berechnet wird, das in seinem Speicher (M4) gespeichert ist und einen der Objektvorrichtung (CU3) zugeordneten Datenwert (Ein) berücksichtigt.

**5.** Verfahren nach Anspruch 4, dadurch gekennzeichnet, daß das vorgenannte Programm (P1) auch einen Zwischenschlüssel (Sm) berücksichtigt, der zuvor in den Speicher (M4) des Auswertungssystems (4) gespeichert worden ist.

**6.** Verfahren nach Anspruch 1, dadurch gekennzeichnet, daß für die vorgenannte Transformation (T) eine Antivalenz-Funktion verwendet wird.

**7.** Initialisierungssystem zur Durchführung des Verfahrens nach einem der Ansprüche 1 bis 6, dadurch gekennzeichnet, daß es zur Initialisierung einer Objektvorrichtung (CU3) mit einem gewechselten Schlüssel Sd folgendes enthält:
- Verbindungsmittel (I0, I3, L) mit der Objektvorrichtung (CU3), - einen Speicher (M2), in dem ein Grundschlüssel (Sb) sowie ein Programm (P2) gespeichert sind, - Verarbeitungsschaltungen (T2) zum Berechnen des gewechselten Schlüssels Sd durch Ausführung des Programms (P2), das eine kommutative, kombinatorische, eineindeutige Transformation (T) auf den Grundschlüssel sowie auf einen jeder Objektvorrichtung (CU3) zugeordneten Wechselparameter Du anwendet, so daß gilt: Sd = Sb (T) Du.

**8.** System nach Anspruch 7, ferner gekennzeichnet durch Verarbeitungsschaltungen (T1) zum Berechnen des vorgenannten Wechselparameters Du durch Ausführung eines Programms (P1), das in einem Speicher (M1) gespeichert ist und das wenigstens einen der Objektvorrichtung (CU3) zugeordneten Datenwert (Eu) berücksichtigt.

**9.** System nach Anspruch 8, dadurch gekennzeichnet, daß das vorgenannte Programm (P1) außerdem einen Zwischenschlüssel (Sm) berücksichtigt, der zuvor in dem Speicher (M1) abgespeichert worden ist.

**10.** System nach einem der Ansprüche 7 bis 9, dadurch gekennzeichnet, daß die Verarbeitungsschaltungen (T1) und der vorgenannte Speicher (M1) in einem tragbaren Objekt, beispielsweise einer Speicherkarte (CM1) integriert sind.

**11.** System nach einem der Ansprüche 7 bis 9, dadurch gekennzeichnet, daß die Verarbeitungsschaltungen (T1, T2) und die Speicher (M1, M2) in einem Gehäuse mit integrierten Schaltungen integriert sind.

**12.** System nach Anspruch 11, dadurch gekennzeichnet, daß das vorgenannte Gehäuse in einem tragbaren Objekt, beispielsweise einer Speicherkarte, untergebracht ist.

**13.** Auswertungssystem zur Durchführung des Verfahrens nach einem der Ansprüche 1 bis 6, dadurch gekennzeichnet, daß es zum wiedererkennen des gewechselten Schlüssels Sd, der in einer Objektvorrichtung (CU3) gespeichert ist, folgendes enthält:
- Verbindungsmittel (I0, I3, L) mit der objektvorrichtung (CU3),
- einen Speicher (M5), in dem ein Programm (P2) gespeichert ist sowie Verarbeitungsschaltungen (T5) zum Berechnen eines Zwischenparameters Pu durch Ausführung des Programms (P2), das eine kommutative, kombinatorische, eineindeutige Transformation (T) auf einen jeder Objektvorrichtung (CU3) zugeordneten Wechselparameter Du sowie auf einen jeder Objektvorrichtung (CU3) zugeordneten Datenwert Cu anwendet, so daß gilt: Pu = Du (T) Cu,
- einen Speicher (M4) in dem ein Grundschlüssel Sb und ein Programm (P3) gespeichert sind, sowie Verarbeitungsschaltungen (T4) zum Berechnen eines Zertifikats R1 durch Ausführung des Programms (P3), wobei gilt:

$$R1 = f3 \ (K1, \ Ex)$$
$$mit \ K1 = Sb \ (T) \ Pu,$$

wobei Ex eine externe Information ist.

**14.** System nach Anspruch 13, dadurch gekennzeichnet, daß der vorgenannte Speicher (M4) außerdem ein Programm (P1) enthält, das von den Verarbeitungsschaltungen (T4) ausgeführt wird, um den vorgenannten Wechselparameter Du zu berechnen, und das wenigstens einen der Objektvorrichtung (CU3) zugeordneten Datenwert (Eu) berücksichtigt.

15. System nach Anspruch 14, dadurch gekennzeichnet, daß das vorgenannte Programm (P1) ferner einen Zwischenschlüssel (Sm) berücksichtigt, der zuvor in den Speicher (M4) gespeichert worden ist.

16. System nach einem der Ansprüche 13 bis 15, dadurch gekennzeichnet, daß der Speicher (M4) und die Verarbeitungsschaltungen (T4) in einem tragbaren Objekt (CM4), beispielsweise einer Speicherkarte, integriert sind.

17. System nach einem der Ansprüche 13 bis 15, dadurch gekennzeichnet, daß die Speicher (M4, M5) und die Verarbeitungsschaltungen (T4, T5) in einem Gehäuse mit integrierten Schaltungen integriert sind.

18. System nach Anspruch 17, dadurch gekennzeichnet, daß das vorgenannte Gehäuse in einem tragbaren Objekt, beispielsweise einer Speicherkarte, untergebracht ist.

19. System nach einem der Ansprüche 13 bis 15, dadurch gekennzeichnet, daß der Speicher (M3) der Objektvorrichtung (CU3), der mit dem System verbunden ist, ein Programm (P4) enthält, das durch die Verarbeitungsschaltungen (T3) ausgeführt wird, um ein Zertifikat R2 zu berechnen, bei dem gilt:

$$R2 = f4 \ (Ex, \ K2)$$
$$mit \ K2 = Sd \ (T) \ Cu$$

wobei Ex die vorgenannte externe Information ist und wobei das Zertifikat R2 mit dem von dem System zuvor berechneten Zertifikat R1 identisch sein soll.

20. System nach einem der Ansprüche 13 bis 19, dadurch gekennzeichnet, daß die Objektvorrichtung (CU3) ein tragbares Objekt, beispielsweise eine Speicherkarte, ist.

FIG. 1

EP 0 253 722 B1

FIG. 2